# EUROPÄISCHE PATENTSCHRIFT

(11) **EP 2 000 290 B1**
(45) Veröffentlichungstag und Bekanntmachung des Hinweises auf die Patenterteilung: **27.01.2010**
(21) Anmeldenummer: 08154128.6
(22) Anmeldetag: 07.04.2008
(51) Int. Cl.: B29D 30/06, B29C 33/02, B29C 35/02

(54) **Vorrichtung zur Vulkanisation eines Fahrzeugreifens mit einer Heizform**
Device for vulcanising a vehicle tyre with a heat mould
Dispositif de vulcanisation d'un pneu de véhicule à l'aide d'un moule chauffant

(30) Priorität: 06.06.2007 DE 102007026425
(43) Veröffentlichungstag der Anmeldung: 10.12.2008
(73) Patentinhaber: Continental Reifen Deutschland GmbH, 30165 Hannover (DE)
(72) Erfinder: Fricke, Bernd, 31319 Sehnde (DE); Krohne, Holger, 38176 Wendeburg (DE); Hackbarth, Rolf, 30926 Seelze (DE)
(74) Vertreter: Finger, Karsten

(56) Entgegenhaltungen:
- EP-A- 0 604 984
- WO-A-2008/093591
- DE-A1- 1 945 671
- JP-A- 62 037 107
- US-A1- 2004 247 717

## Beschreibung

Die Erfindung betrifft eine Vorrichtung zur Vulkanisation eines Fahrzeugreifens mit einer Heizform.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp. Von außen wird der Reifenrohling über an der Form anliegende Heizplatten beheizt.

Die EP 0 604 984 A, DE 19 45 671 A1, US 2004/247717 A1, JP 62 037107 A, und WO 2008/093591 A offenbaren Heizpressen, die aus dem Stand der Technik bekannt sind.

Aus der nachveröffentlichten Druckschrift WO-A-2008/093591 (siehe europäische Benennungsstaaten) mit älterem Zeitrang **(Artikel 54 (3) EPÜ)** ist eine Vorrichtung zur Vulkanisation eines Fahrzeugreifens mit einer Heizform bekannt, wobei die Heizform eine Innenheizung mit einem auf der Reifeninnenseite anliegenden Balg und eine Außenheizung umfaßt, wobei die Außenheizung über eine Seitenschale Teile der Reifenaußenseite des Fahrzeugreifens beheizt und wobei eine Wärmeisolierung einen Bereich zwischen der Innenheizung und der Seitenschale der Heizform thermisch entkoppelt.

Es besteht das Problem unerwünschter Temperaturen in bestimmten Reifenteilen im Bereich des Wulstes bedingt durch eine Wärmeleitung aus dem Balginneren heraus über den Balgmechanismus und Wulstringe in den Wirkungsbereich der Außenheizung der Form in der Heizpresse. Dieser Vorgang ist unerwünscht, da eine gezielte Temperaturführung dadurch nicht möglich ist. Bestimmte Reifenteile, insb. der Wulst können dadurch überheizt und dadurch vorgeschädigt werden.

Der Erfindung liegt die Aufgabe zu Grunde, eine Vorrichtung zur Vulkanisation eines Fahrzeugreifens zu schaffen, bei dem der Fahrzeugreifen mit einer hohen Produktqualität erzeugt wird.

Gelöst wird die Aufgabe gemäß Anspruch 1.

Die Wärmeisolierung zwischen Innenheizung und den Seitenschalen realisiert eine thermische Entkopplung des äußeren Wulstbereichs von der Innenheizung. Dadurch werden die Temperaturen des äußeren Wulstbereichs abgesenkt und nur noch über die Außenheizung bestimmt. Die Isolierung ermöglicht so eine gezielte Temperaturführung des Reifens, insb. der Reifenwülste. Die Wärmeisolierung verhindert eine nicht kontrollierbare Mischtemperatur in den reifennahen Bereichen der Form.

Gemäß der Erfindung ist vorgesehen, dass die Wärmeisolierung im oberen oder/und unteren Balgtellerring angeordnet ist.

Die Praxis zeigt, dass Reifen überwiegend an den Stellen ausfallen, die sich während der Vulkanisation in den Heizpressen im Bereich der Formoberseite befunden haben. Als Ursache werden die im Bereich der Formoberseite herrschenden höheren Temperaturen verantwortlich gemacht. Die Wärmeisolierung reduziert u.a. die formoberseitigen Wulsttemperaturen auf das Niveau der Formunterseite.

In einer vorteilhaften Weiterbildung der Erfindung ist vorgesehen, dass der Balgtellerring aus einem ersten und zweiten Formteil besteht, wobei die Wärmisolierung zwischen beiden Formteilen angeordnet ist.

Die Anordnung der Wärmeisolierung im Balgtellerring hat den Vorteil, dass diese geschützt liegt und nicht durch Relativbewegung beim Zusammenfahren der Heizpresse beschädigt werden kann.

In einer weiteren vorteilhaften Weiterbildung der Erfindung ist vorgesehen, dass die Wärmisolierung über eine Klemmung und eine Schraubverbindung zwischen beiden Formteilen gehalten wird. Dadurch wird die Wärmeisolierung einfach zwischen beiden Formteilen fixiert.

In einer weiteren vorteilhaften Weiterbildung der Erfindung ist vorgesehen, dass die Wärmeisolierung aus einem druckstabilen und temperaturbeständigen Kunststoff-Material besteht. Auf dieser Weise hält die Wärmeisolierung der hohen Temperaturbeanspruchung stand, die mit der Vulkanisation verbunden sind.

In einer weiteren vorteilhaften Weiterbildung der Erfindung ist vorgesehen, dass die Wärmeisolierung aus Teflon-Material besteht. Teflon-Material ist ein geeignetes Material welches den gestellten Anforderungen entspricht.

In einer weiteren vorteilhaften Weiterbildung der Erfindung ist vorgesehen, dass der Balg eine Aufdickung von der Balgklemmung im Balgtellerring bis zum Bereich Wulstzehe des zu vulkanisierenden Fahrzeugreifens aufweist. Auf diese Weise wird ebenfalls der Wärmefluss von der Innenheizung durch den Balg in die Seitenschalen reduziert.

In einer weiteren vorteilhaften Weiterbildung der Erfindung ist vorgesehen, dass in der Heizform mindestens ein thermischer Widerstand zur Reduzierung des von der Außenheizung zugeführten Wärmeeintrages angeordnet ist. Dadurch wird der Wärmeeintrag in thermisch empfindliche Bauteile des Fahrzeugsreifens auf ein gewünschtes Maß reduziert. Der thermische Widerstand nutzt das instationäre Temperaturverhalten der Heizform nach dem Beschicken mit dem Reifen-Rohling aus.

In einer weiteren vorteilhaften Weiterbildung der Erfindung ist vorgesehen, dass der thermischer Widerstand an den Rückseiten der Seitenschalen zur Reduzierung des Wärmeeintrages in thermisch empfindliche Bauteile des Fahrzeugreifens angeordnet ist. Auf diese Weise wird insbesondere der Wärmeeintrag in den Reifenwulst und die Seitenwand des Fahrzeugreifens gesteuert.

In einer weiteren vorteilhaften Weiterbildung der Erfindung ist vorgesehen, dass der thermischer Widerstand als Aussparrung in Form von Rillen in der Heizform ausgebildet ist. Aussparungen in der Heizform in Form von Rillen lassen sich auf einfache Weise realisieren.

In einer weiteren vorteilhaften Weiterbildung der Erfindung ist vorgesehen, dass der thermischer Widerstand ein isolierendes Material umfasst. Mit dem isolierenden Material lässt sich einfach ein entsprechender thermischer Widerstand realisieren.

In einer weiteren vorteilhaften Weiterbildung der Erfindung ist vorgesehen, dass der thermischer Widerstand zur Temperaturregelung der Seitenschalen aktiv regelbar ist. Auf diese Weise lässt sich der zeitliche Temperaturverlauf in den Seitenschalen gezielt regeln.

Anhand eines Ausführungsbeispiels soll die Erfindung näher erläutert werden. Es zeigt:

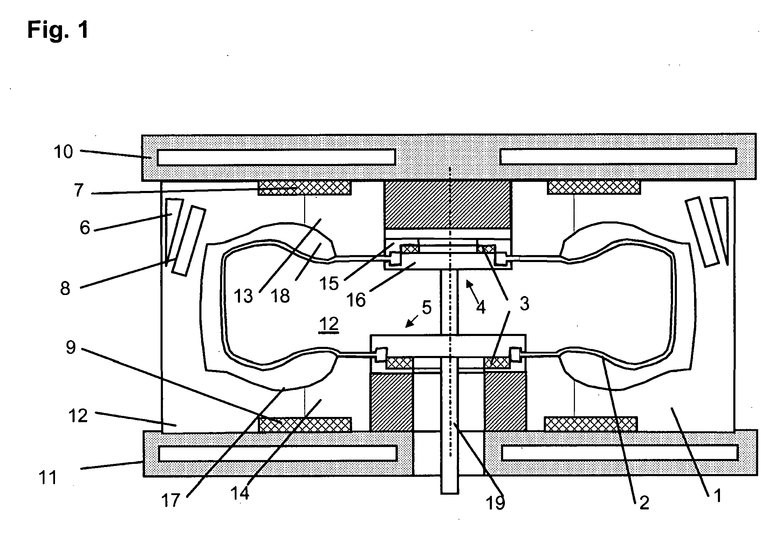

- Figur 1:: eine erfindungsgemäße Heizform für die Vulkanisation eines Fahrzeugreifens.

Die Figur 1 zeigt die erfindungsgemäße Heizform 1. In der Heizform 1 ist der zu vulkanisierende Fahrzeugreifen 17 angeordnet. Alle Bauteile der Heizform 1 sind im Wesentlichen rotationssymmetrisch, wobei diese Figur eine Schnittdarstellung zeigt. Die Außenheizung umfasst im Wesentlichen die obere und untere Segmentheizung 10 und 11, sowie die Dampfkammer 6. Über diese Heizungen werden dem Fahrzeugreifen 17 auf seiner Außenseite über die Heizform 1 Wärme zugeführt. Die Innenheizung wird durch den Balginnenraum 12 sowie den Balg 2 gebildet, wobei der Balginnenraum 12 mit einem entsprechenden Heizmedium beaufschlagt wird. Die Heizform 1 besitzt an den Positionen 13 und 14 obere und untere Seitenschalen, über die Wärme insbesondere dem Reifenwulst 18 zugeführt wird. Der obere und untere Balgtellerring 4 und 5 dienen unter anderem zur Aufnahme der Balgklemmung des Balges 2. Beide Balgtellerringe 4 und 5 bestehen aus einem ersten und einem zweiten Formteil 15 und 16, wobei der Balg 2 zwischen beiden Formteilen eingeklemmt wird. Die Wärmeisolierung 3 wird ebenfalls zwischen dem Formteil 15 und dem Formteil 16 eingeklemmt, sowie mit einer Schraubverbindung fest an diesen Formteilen fixiert. Durch die Wärmeisolierung 3 wird der Wärmefluss vom Formteil 16 in das Formteil 15 unterbrochen, wobei ebenfalls die angrenzende Seitenschale an der Position 13 in der Heizform 1 betroffen ist. Die Innenheizung wird z.B. bei bestimmten Reifen zu Beginn der Vulkanisation mit einer Temperatur von ca. 205°C beaufschlagt. Die Außenheizung besitzt hingegen z.B. eine um etwa 50°C niedrigere Temperatur, womit ein Temperaturgefälle zwischen Innenheizung und Außenheizung vorliegt. Die Wärmeisolierung 3 unterbindet den Wärmefluss aus dem Bereich der Innenheizung in die Bereiche, die nur über die Außenheizung beheizt werden sollen. Bei diesem Ausführungsbeispiel ist die Wärmeisolierung 3 sowohl im oberen Balgtellerring 4 als auch im unteren Balgtellerring 5 angeordnet. Denkbar ist ebenfalls, dass ausschließlich eine Wärmeisolierung 3 im oberen oder unteren Balgtellerring vorgesehen ist. Die Wärmeisolierung ist im Wesentlichen rotationssymmetrisch zur Symmetrieachse 19 ausgebildet und kann ggf. auch im Bereich der Zwischenringe oder Wulstringe der Heizform angeordnet sein, die in unmittelbarer Nähe zur Seitenschale liegen.

Die Heizform 1 weist ferner thermische Widerstände 7, 8 und 9 auf. Die thermischen Widerstände 7 und 9 sind jeweils auf den Rückseiten der Seitenschalen angeordnet. Diese Widerstände reduzieren den Wärmeeintrag in thermisch empfindliche Bauteile des Fahrzeugreifens, insbesondere in den Reifenwulst 18. Der thermische Widerstand 8 deckt zusätzlich die Dampfkammer 6 ab und reduziert in diesem Bereich den entsprechenden Wärmefluss.

Der Nachteil von herkömmlichen Heizformen besteht darin, dass die Temperaturen im Wulst im Vergleich zu denen im Laufstreifen zu hoch sind. Bei den Heizformen befinden sich die Seitenschalen in Bereichen höherer Temperatur, da sie weiter innen in der Form liegen. Die Laufstreifensegmente befinden sich hingegen seitlich am äußeren Rand der Form. Hinzu kommt, dass der Wärmebedarf der Segmente höher ist als der der Seitenschalen. Die höhere Temperatur der Seitenschalen bedingt wiederum unerwünscht hohe Temperaturen in den Reifenwülsten, was sich negativ auf deren Haltbarkeit auswirkt.

Der thermische Widerstand 7 und 9 in den Seitenschalen bzw. unterhalb der Segmentheizung 10 und 11 der Heizform 1 dient dazu, den Wärmefluss von der Außenheizung in den Reifen hinein auf ein gewolltes Maß zu reduzieren und somit die Temperaturen von thermisch sensiblen Bauteilen des zu heizenden Reifens 17 abzusenken. Bei LKW-Reifen betrifft das z.B. den Wulst und/oder die obere Gürtelkante des Reifens, bei PKW-Reifen hingegen z.B. die Lauffläche von Reifen mit einer verstärkten Seitenwand. Dies betrifft die Formober- und/oder Unterseite der Heizpresse.

Es werden mit dem thermischen Widerstand somit zwei Phänomene berücksichtigt:
1. Der instationäre Temperaturverlauf in der Heizform
   In einer Heizform ist der Temperaturverlauf während eines Heizzyklus instationär. Zu Beginn kühlt die Form durch den kalten Reifen-Rohling stark ab und erreicht erst gegen Ende des Zyklus wieder die Starttemperatur. Die Wärme dafür wird durch die Außenheizung bereitgestellt. Der Wärmeleitwiderstand bzw. thermische Widerstand 7 bis 9 reduziert den Wärmefluss in die zu schützenden Bereiche des Reifen 17 und stellt so die gewollten niedrigeren Temperaturen sicher. Die Gleichgewichtstemperatur bzw. Endtemperatur wird erst zu einem späteren Zeitpunkt erreicht.
2. Der ungleichmäßige Temperaturverteilung in der Form
   Dem instationären Verhalten ist eine ungleichmäßige Temperaturverteilung in der Heizform 1 überlagert. Die Heizform 1 ist in ihrem Inneren wärmer als in den seitlichen Außenbereichen. Die Temperaturen der im Inneren der Heizform 1 befindlichen Seitenschalen erreichen die Medientemperatur der oben und unten anliegenden Segmentheizungen (Außenheizung). Die Temperaturen der seitlich außen in der Form befindlichen Laufstreifensegmente hingegen liegen aufgrund des natürlichen Gefälles von innen nach außen deutlich darunter. Der Wärmeleitwiderstand reduziert die Temperaturen der Seitenschalen auf ein gewünschtes Niveau.

Mit Hilfe der Wärmeisolierung 3 und des thermischen Wärmeleitwiderstands bzw. der Widerstände 7 bis 9 kann ein ideal geheizter Reifen hergestellt werden, d.h. die empfindlichen Bauteile wie zum Beispiel der Wulst 18 erhalten nur die für sie nötige Prozesswärme. Zuviel Wärme bedeutet eine Überheizung und führt zu einer Vorschädigung des Reifens 17.

### Bezugszeichenliste

(ist Teil der Beschreibung)
1 Heizform
2 Balg
3 Wärmeisolierung
4 oberer Balgtellerring
5 unterer Balgtellerring
6 Dampfkammer der Außenheizung
7 thermischer Widerstand an den Rückseiten der Seitenschalen
8 thermischer Widerstand
9 thermischer Widerstand
10 obere Segmentheizung
11 untere Segmentheizung
12 Balginnenraum
13 Position der Seitenschale in der Formoberseite
14 Position der Seitenschale in der Formunterseite
15 erstes Formteil des Balgtellerrings
16 zweites Formteil des Balgtellerrings
17 Fahrzeugreifen
18 Reifenwulst st
19 Symmetrieachse
20 Laufstreifen

## Patentansprüche

1. Vorrichtung zur Vulkanisation eines Fahrzeugreifens (17) mit einer Heizform (1), wobei die Heizform (1) eine Innenheizung mit einem auf der Reifeninnenseite anliegenden Balg (2) und eine Außenheizung umfasst, wobei die Außenheizung über eine Seitenschale Teile der Reifenaußenseite des Fahrzeugreifens (17) beheizt, eine Wärmeisolierung (3) einen Bereich zwischen der Innenheizung und der Seitenschale der Heizform (1) thermisch entkoppelt und
die Wärmeisolierung (3) im oberen oder/und unteren Balgtellerring (4, 5) angeordnet ist.

2. Vorrichtung nach Anspruch 1, wobei
der Balgtellerring (4) und (5) aus einem ersten und zweiten Formteil (15) und (16) besteht, wobei die Wärmisolierung (3) zwischen beiden Formteilen (15) und (16) angeordnet ist.

3. Vorrichtung nach einem der vorhergehenden Ansprüche, wobei
die Wärmisolierung (3) über eine Klemmung und eine Schraubverbindung zwischen beiden Formteilen (15) und (16) gehalten wird.

4. Vorrichtung nach einem der vorhergehenden Ansprüche, wobei
die Wärmeisolierung (3) aus einem druckstabilen und temperaturbeständigen Kunststoff-Material besteht.

5. Vorrichtung nach einem der vorhergehenden Anspräche, wobei
die Wärmeisolierung (3) aus Teflon-Material besteht.

6. Vorrichtung nach einem der vorhergehenden Ansprüche, wobei
der Balg (2) eine Aufdickung von der Balgklemmung im Balgtellerring (4) und (5) bis zum Bereich Wulstzehe des zu vulkanisierenden Fahrzeugreifens (17) aufweist.

7. Vorrichtung nach einem der vorhergehenden Ansprüche, wobei
in der Heizform (1) mindestens ein thermischer Widerstand (7, 8, 9) zur Reduzierung des von der Außenheizung zugeführten Wärmeeintrages angeordnet ist.

8. Vorrichtung nach einem der vorhergehenden Ansprüche, wobei
der thermischer Widerstand (7, 9) an den Rückseiten der Seitenschalen zur Reduzierung des Wärmeeintrages in thermisch empfindliche Bauteile des Fahrzeugreifens (17) angeordnet ist.

9. Vorrichtung nach einem der vorhergehenden Ansprüche, wobei
der thermischer Widerstand als Aussparrung in Form von Rillen in der Heizform (1) ausgebildet ist.

10. Vorrichtung nach einem der vorhergehenden Ansprüche, wobei
der thermischer Widerstand (7, 8, 9) ein isolierendes Material umfasst.

11. Vorrichtung nach einem der vorhergehenden Ansprüche, wobei
der thermischer Widerstand (7, 8, 9) zur Temperaturregelung der Seitenschalen aktiv regelbar ist.

## Claims

1. Device for vulcanizing a vehicle tyre (17) with a heating mould (1), wherein the heating mould (1) comprises an internal heater with a bladder (2) lying on the inner side of the tyre and an external heater, wherein the external heater heats parts of the outer side of the vehicle tyre (17) by way of a side shell, a heat insulation (3) thermally isolates a region between the internal heater and the side shell of the heating mould (1) and the heat insulation (3) is arranged in the upper or/and lower bladder disc ring (4, 5).

2. Device according to Claim 1, wherein the bladder disc ring (4) and (5) comprises a first and second mould part (15) and (16), wherein the heat insulation (3) is arranged between the two mould parts (15) and (16).

3. Device according to one of the preceding claims, wherein the heat insulation (3) is held between the two mould parts (15) and (16) by way of a clamping and a screw connection.

4. Device according to one of the preceding claims, wherein the heat insulation (3) consists of a pressure-stable and temperature-resistant plastics material.

5. Device according to one of the preceding claims, wherein the heat insulation (3) consists of Teflon material.

6. Device according to one of the preceding claims, wherein the bladder (2) has a thickening from the bladder clamping in the bladder disc ring (4) and (5) to the region of the bead toe of the vehicle tyre (17) to be vulcanized.

7. Device according to one of the preceding claims, wherein at least one thermal resistance (7, 8, 9) for reducing the heat input supplied by the external heater is arranged in the heating mould (1).

8. Device according to one of the preceding claims, wherein the thermal resistance (7, 9) is arranged on the rear sides of the side shells to reduce the heat input in thermally sensitive components of the vehicle tyre (17).

9. Device according to one of the preceding claims, wherein the thermal resistance is formed as a recess in the form of grooves in the heating mould (1).

10. Device according to one of the preceding claims, wherein the thermal resistance (7, 8, 9) comprises an insulating material.

11. Device according to one of the preceding claims, wherein the thermal resistance (7, 8, 9) can be actively regulated to regulate the temperature of the side shells.

## Revendications

1. Dispositif de vulcanisation d'un bandage (17) pour roue de véhicule à l'aide d'un moule chauffant (1), dans lequel
le moule chauffant (1) comporte un chauffage intérieur doté d'un soufflet (2) qui repose contre le côté intérieur du bandage et un chauffage extérieur,
le chauffage extérieur chauffe le côté extérieur du bandage (17) de roue de véhicule par une coquille latérale,
une isolation thermique (3) découple thermiquement une partie située entre le chauffage intérieur et la coquille latérale du moule chauffant (1) et
l'isolation thermique (3) est disposée dans l'anneau supérieur et/ou l'anneau inférieur (4, 5) de plateau de soufflet.

2. Dispositif selon la revendication 1, dans lequel l'anneau (4) et l'anneau (5) de plateau de soufflet sont constitués d'une première et d'une deuxième pièce moulée (15) et (16), l'isolation thermique (3) étant disposée entre les deux pièces moulées (15) et (16).

3. Dispositif selon l'une des revendications précédentes, dans lequel l'isolation thermique (3) est maintenue entre les deux pièces moulées (15) et (16) par un serrage et une liaison filetée.

4. Dispositif selon l'une des revendications précédentes, dans lequel l'isolation thermique (3) est constituée d'une matière synthétique qui résiste à la pression et à la chaleur.

5. Dispositif selon l'une des revendications précédentes, dans lequel l'isolation thermique (3) est constituée d'un matériau de téflon.

6. Dispositif selon l'une des revendications précédentes, dans lequel le soufflet (2) présente un épaississement entre le serrage de soufflet prévu dans l'anneau (4) et l'anneau (5) de plateau de soufflet jusqu'à la zone de la pointe de bourrelet du bandage (17) de roue de véhicule à vulcaniser.

7. Dispositif selon l'une des revendications précédentes, dans lequel au moins une résistance thermique (7, 8, 9) de réduction de l'apport de chaleur par le chauffage extérieur est disposée dans le moule chauffant (1).

8. Dispositif selon l'une des revendications précédentes, dans lequel la résistance thermique (7, 9) est disposée sur le côté arrière de la coquille latérale de manière à réduire l'apport de chaleur dans des composants thermiquement sensibles du bandage (17) de roue de véhicule.

9. Dispositif selon l'une des revendications précédentes, dans lequel la résistance thermique est configurée sous la forme de découpes en rainure ménagées dans le moule chauffant (1).

10. Dispositif selon l'une des revendications précédentes, dans lequel la résistance thermique (7, 8, 9) contient un matériau isolant.

11. Dispositif selon l'une des revendications précédentes, dans lequel la résistance thermique (7, 8, 9) peut être régulée activement pour réguler la température de la coquille latérale.
